(19) Europäisches Patentamt / European Patent Office / Office européen des brevets

(11) **EP 3 407 032 B1**

(12) **EUROPÄISCHE PATENTSCHRIFT**

(45) Veröffentlichungstag und Bekanntmachung des Hinweises auf die Patenterteilung:
**13.09.2023 Patentblatt 2023/37**

(21) Anmeldenummer: **18170676.3**

(22) Anmeldetag: **03.05.2018**

(51) Internationale Patentklassifikation (IPC):
**G01H 3/04** *(2006.01)* **G01H 17/00** *(2006.01)*
**G06F 30/20** *(2020.01)* **G06F 30/30** *(2020.01)*

(52) Gemeinsame Patentklassifikation (CPC):
**G01H 17/00; G01H 3/04; G06F 30/20; G06F 30/30**

(54) **VERFAHREN ZUR ERMITTLUNG DER GERÄUSCHVERTEILUNG EINER SCHALTUNG ZUR OPTIMIERUNG DES LAYOUTS DER SCHALTUNG**

METHOD FOR DETERMINING THE NOISE DISTRIBUTION OF A CIRCUIT FOR OPTIMISING THE LAYOUT OF THE CIRCUIT

PROCÉDÉ DE DÉTERMINATION DE LA DISTRIBUTION DU BRUIT D'UN CIRCUIT POUR OPTIMISER L'AGENCEMENT DU CIRCUIT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.05.2017 DE 102017109712**

(43) Veröffentlichungstag der Anmeldung:
**28.11.2018 Patentblatt 2018/48**

(73) Patentinhaber: **AVL Software And Functions GmbH**
**93059 Regensburg (DE)**

(72) Erfinder:
• **REINDL, Hartwig**
**93055 Regensburg (DE)**
• **OLBRICH, Peter**
**94553 Mariaposching (DE)**

(74) Vertreter: **Louis Pöhlau Lohrentz**
**Patentanwälte**
**Merianstrasse 26**
**90409 Nürnberg (DE)**

(56) Entgegenhaltungen:
CN-A- 104 331 567 CN-A- 104 809 274
CN-A- 105 095 609 US-A1- 2016 011 040

• BAEK HYUNHO ET AL: "Electrical approach to acoustic noise for MLCCs of power delivery network in mobile system", 2015 IEEE ELECTRICAL DESIGN OF ADVANCED PACKAGING AND SYSTEMS SYMPOSIUM (EDAPS), IEEE, 14. Dezember 2015 (2015-12-14), Seiten 62-66, XP032851920, DOI: 10.1109/EDAPS.2015.7383668 [gefunden am 2016-01-14]
• LINGYU ZHU ET AL: "A Noise Level Prediction Method Based on Electro-Mechanical Frequency Response Function for Capacitors", PLOS ONE, Bd. 8, Nr. 12, 9. Dezember 2013 (2013-12-09), Seiten 1-9, XP055511050, DOI: 10.1371/journal.pone.0081651
• JI SHENGCHANG ET AL: "Study on the Noise-Level Calculation Method for Capacitor Stacks in HVDC Converter Station", IEEE TRANSACTIONS ON POWER DELIVERY, IEEE SERVICE CENTER, NEW YORK, NY, US, Bd. 25, Nr. 3, 1. Juli 2010 (2010-07-01), Seiten 1866-1873, XP011311970, ISSN: 0885-8977
• JINGZHU HU ET AL: "Electromagnetic vibration noise analysis of transformer windings and core", IET ELECTRIC POWER APPLICAT, IET, UK, Bd. 10, Nr. 4, 1. April 2016 (2016-04-01), Seiten 251-257, XP006056245, ISSN: 1751-8660, DOI: 10.1049/IET-EPA.2015.0309

EP 3 407 032 B1

**Beschreibung**

Die Erfindung betrifft ein Verfahren zur Ermittlung der Geräuschverteilung einer Schaltung durch rechnerische Bestimmung akustischer Störsignale einer elektrischen Schaltung nach den Merkmalen des Oberbegriffs des Anspruchs 1.

Aus dem Dokument CN 104 330 647 A ist ein Verfahren zum Erstellen eines Störsignalmodells eines Kondensators bekannt, wobei der Kondensator mit elektrischen Signalen kleiner Amplitude beaufschlagt wird und die resultierenden Störsignale akustisch gemessen werden. Anhand der gemessenen Störsignale werden die Störsignalpegel bei einer Anregung des Kondensators unter Last rechnerisch bestimmt.

In der WO 2014/157495 ist ein Verfahren zur Analyse von Störsignalen von auf einer Platine befindlichen Kondensatoren beschrieben. Zur Störsignalanalyse werden die akustischen Störsignale FEM-basiert ermittelt. Um den Rechenaufwand für die Analyse möglichst gering zu halten, werden die Störsignale mehrerer Kondensatoren zu einer virtuellen, zentralen Störquelle zusammengefasst.

Das Dokument - Electrical approach to acoustic noise for MLCCs of power delivery network in a mobile system - beschreibt eine Simulation des Spannungsabfalls eines Energieversorgungssystems mit mehreren Kondensatoren. Anhand des Spannungsabfalls wird ermittelt, welche Kondensatoren des Systems am meisten schwingen.

Das Dokument - A noise level prediction method based on electro-mechanical frequency response function for capacitors - beschreibt eine Bestimmung der Geräuschentwicklung eines einzelnen Kondensators im Betrieb. Die Bestimmung erfolgt durch eine Messung einer elektromechanischen Antwortfunktion anhand eines Kondensators.

Das Dokument - Study on the Noise-Level Calculation Method for Capacitor Stacks in HVDC Converter Station - beschreibt die Berechnung des Geräuschpegels eines Kondensatorstapels. Dazu wird mechanische Kraft auf den Stapel ausgeübt, um eine Frequenz-Antwort-Funktion zu erhalten, woraus anschließend das "weight sound pressure level" berechnet werden kann.

Aufgabe der Erfindung ist es, ein einfach durchzuführendes und weniger rechenaufwändiges Verfahren zu einer rechnerbasierten Bestimmung akustischer Störsignale einer elektrischen Schaltung oder eines Geräts zur Verfügung zu stellen, um eine elektrische Schaltung mit verbesserten akustischen Eigenschaften zu entwerfen. Insbesondere soll bereits in einem frühen Entwurfsstadium eine Aussage über akustische Störsignale getroffen werden. Vorzugsweise sollen akustische Störsignale bestimmt werden, ohne dass zuerst ein Prototyp hergestellt werden muss.

Diese Aufgabe wird mit einem Verfahren nach den Merkmalen des Anspruchs 1 gelöst.

Bei der erfindungsgemäßen Lösung des Anspruchs 1 handelt es sich um ein Verfahren zur Ermittlung der Geräuschverteilung einer Schaltung zur Optimierung des Layouts der Schaltung, durch rechnerische Bestimmung akustischer Störsignale der elektrischen Schaltung, beispielsweise eines Schaltreglers oder Spannungswandlers oder eines Inverters, wobei die elektrische Schaltung wenigstens einen Kondensator mit einem Dielektrikum aufweist. Zunächst wird anhand eines Schaltbilds der Schaltung ein an dem Kondensator anliegender Klemmenspannungsverlauf rechnerisch ermittelt, indem auf Basis des Schaltbilds ein Betrieb der Schaltung simuliert wird. Anschließend wird anhand des Klemmenspannungsverlaufs ein auf das Dielektrikum wirkendes elektrisches Feld bestimmt und daraus eine auf dem elektrischen Feld basierende periodische, mechanische Verformung des Dielektrikums berechnet, wobei zur Optimierung des Layouts der Schaltung Komponenten mit hoher Geräuschverteilung ersetzt, befestigt oder anders positioniert werden.

Die mechanische Verformung des Dielektrikums kann durch den inversen piezoelektrischen Effekt beschrieben werden, welcher durch ein wechselndes elektrisches Feld verursacht wird. Das wechselnde elektrische Feld wird durch den zeitabhängigen Spannungsverlauf im Kondensator hervorgerufen und bewirkt dadurch akustische Störsignale.

Es kann vorgesehen sein, dass die elektrische Schaltung wenigstens eine Spule mit einem Spulenkern aufweist. Zunächst wird anhand eines Schaltbilds der Schaltung ein durch die Spule fließender Klemmenstromverlauf rechnerisch ermittelt, indem auf Basis des Schaltbilds ein Betrieb der Schaltung simuliert wird, und wobei anschließend anhand des Klemmenstromverlaufs eine auf den Spulenkern wirkende Magnetisierung M bestimmt und daraus eine auf der Magnetisierung M basierende periodische, mechanische Verformung (Magnetostriktion $\lambda$) des Spulenkerns berechnet wird.

Im Sinne der Erfindung wird unter rechnerischer Bestimmung akustischer Störsignale eine computerbasierte Berechnung oder computerbasierte Simulation verstanden. Ziel der computerbasierten Berechnung oder computerbasierten Simulation ist die Konstruktion bzw. die Herstellung von geräuscharmen elektronischen Schaltungen, oder die Verbesserung bestehender elektronischer Schaltungen. Vorzugsweise wird mittels einer entsprechenden Software auf Basis eines computerlesbaren Schaltbilds ein Betrieb der Schaltung simuliert, und zunächst ein Klemmenspannungsverlauf ermittelt. Anschließend wird anhand des Klemmenspannungsverlaufs von der Software bzw. dem Computer automatisch ein auf das Dielektrikum wirkendes elektrisches Feld bestimmt und daraus eine auf dem elektrischen Feld basierende periodische, mechanische Verformung des Dielektrikums berechnet. Zusätzlich kann anhand des rechnerbasiert ermittelten Klemmenstromverlaufs von der Software bzw. dem Computer automatisch eine auf den Spulenkern wirkende Magnetisierung M bestimmt und daraus eine auf der Magnetisierung M basierende periodische, mechanische Verformung (Magnetostriktion $\lambda$) des Spulenkerns berechnet werden.

Die Magnetostriktion $\lambda$ beschreibt eine Längenänderung, also eine mechanische Verformung, eines magnetischen Bauteils, welches von einem wechselnden magnetischen Feld durchflossen wird. Das wechselnde magnetische Feld wird durch den Stromfluss der Spule verursacht und bewirkt dadurch akustische Störsignale.

Das erfindungsgemäße Verfahren dient zur Herstellung einer elektrischen Schaltung, wobei die akustischen Störsignale der Komponenten rechnerisch bzw. rechnerbasiert bestimmt werden. Nach der im Verfahren beschriebenen Bestimmung der Verformung des Dielektrikums wird der Kondensator mit dem größten akustischen Störsignal im Sinne einer Reduktion der akustischen Störsignale selektiert bzw. im Sinne einer Reduktion akustischer Störsignale optimiert.

Das erfindungsgemäße Verfahren ermöglicht eine Vorhersage der Geräuschverteilung ohne die Schaltung akustisch zu messen. Außerdem kann das Verfahren für eine elektrische Schaltung mehrmals angewendet werden, um nacheinander akustische Störsignale mehrerer Kondensatoren zu bestimmen. Vorteilhafterweise können die Geräuschquellen der einzelnen Komponenten, z.B. von Kondensatoren, schon in der Entwicklungsphase anhand des Schaltbildes bestimmt werden.

Bei der mechanischen Verformung kann es sich um eine eindimensionale Verformung, z.B. eine Längenänderung oder eine Dickenänderung eines Bauteils handeln. Es kann sich auch um eine mehrdimensionale, also eine Volumenänderung eines Bauteils handeln.

Das Layout einer Schaltung wird anhand des erfindungsgemäßen Verfahrens bereits in der Entwicklungsphase optimiert, indem Komponenten mit hoher Geräuschverteilung ersetzt, befestigt oder anders positioniert werden. Außerdem kann die Geräuschverteilung bzw. die Geräuschabstrahlung über ein PCB (Printed Circuit Board), ein Gehäuse oder ähnliches bereits vor der Herstellung von Prototypen oder vor einer Montage der Schaltung, z.B. in ein Gehäuse oder in einem Fahrzeug, bestimmt werden.

Die zu analysierende elektrische Schaltung kann beispielsweise ein Spannungswandler oder ein Stromwandler oder ein Netzgerät oder eine Leistungsstufe, beispielsweise eines Motorsteuergeräts oder ein Fahrtregler eines Elektromotors sein.

Die erfindungsgemäßen Verfahren basieren auf einer rechnergestützten bzw. simulationsgestützten Vorhersage der Geräuschquellen einer Schaltung anhand des Schaltplans und anhand von über Datenblätter verfügbaren technischen Informationen der einzelnen Komponenten der Schaltung. Eine Simulation der elektrischen Schaltung im Betrieb kann beispielsweise mit bekannten Programmen, wie z.B. SPICE oder LTspice, durchgeführt werden. Beispielsweise wird bei dem Entwurf einer elektrischen Schaltung für einen bestimmten Betriebszustand mit einem entsprechenden Simulations-Programm, wie z.B. SPICE oder LTspice, der Klemmenspannungsverlauf eines zu analysierenden Bauteils bestimmt. Anschließend wird vorzugsweise mit demselben Programm die resultierende akustische Störschwingung als periodisch mechanische Schwingung oder Verformung des Kondensators oder der Spule bestimmt.

Nach der Bestimmung einer periodischen, mechanischen Schwingung oder Verformung des analysierten Kondensators oder der analysierten Spule auf Basis des erfindungsgemäßen Verfahrens mit eine Simulation der Schaltung im Betrieb, kann dann eine, vorzugsweise rechnerbasierte, FEM-Analyse (Finite Elemente Methode) durchgeführt werden, um ein durch diese mechanische Schwingung oder Schwingungen auf einem Trägermaterial, vorzugsweise einer Leiterplatte oder PCB-Board, hervorgerufenes Körperschallsignal zu ermitteln.

Üblicherweise wird bei der Simulation einer elektrischen Schaltung anhand eines handelsüblichen Simulationsprogrammes, vorzugsweise SPICE oder LTspice, als Ergebnis eine elektrische Spannung oder ein elektrischer Stromverlauf erhalten. Wenn ein solches handelsübliches Simulationsprogramm verwendet wird, um das erfindungsgemäße Verfahren anzuwenden, wird als Ergebnis ebenfalls ein Verlauf einer Spannungsamplitude oder Stromamplitude erhalten. Um ein solches Ergebnis ohne große Änderungen der handelsüblichen Simulationsprogramme auch auf akustische Störungen anwenden zu können, kann vorgesehen sein, dass in einem Schritt des Verfahrens eine Umwandlung der von einem Simulationsprogramm ermittelten Spannungsamplituden oder Stromamplituden in mechanische Längenänderungen oder Volumenänderungen, also in mechanische Schwingungsamplituden erfolgt. Insbesondere kann die Umwandlung anhand einer vorbestimmten Umrechnungsformel oder Umrechnungstabelle ermittelt werden. Dabei kann für die Analyse von Kondensatoren eine Kondensatorumrechnungsformel oder Kondensatorumrechnungstabelle und davon getrennt für die Analyse von Spulen eine Spulenumrechnungsformel oder Spulenumrechnungstabelle erstellt und/oder verwendet werden. Die Umrechnungsformel oder Umrechnungstabelle kann allgemein für alle Typen von Kondensatoren und/oder Spulen verwendet werden. Alternativ können mehrere Umrechnungsformeln oder Umrechnungstabellen verwendet werden, wobei für einen bestimmten Kondensatortyp oder Spulentyp die entsprechende für den Kondensatortyp oder für den Spulentyp bestimmte Umrechnungsformel oder Umrechnungstabelle verwendet wird.

Um die akustischen Störsignale eines Kondensators zu bestimmen, ist vorgesehen, dass zur Bestimmung des elektrischen Feldes zunächst eine Schichtdicke des Kondensators anhand seiner spannungsabhängigen Kapazität bestimmt wird. Es hat sich als praktikabel erwiesen, dass die Schichtdicke des Kondensators, d.h. der Abstand $d_{lay}$ der Kondensatorplatten, über die spannungsabhängige Kapazität C(U) bei einem Abfall der Kapazität C(U) um 20% der maximalen Kapazität C(U) bestimmt wird. Dabei kann folgende Formel zur Anwendung kommen:

$$d_{lay} = U_{C=-20\%} / 2 \ [\mu m] \qquad (1)$$

Es kann vorgesehen sein, dass zur Bestimmung der mechanischen Verformung des Dielektrikums zunächst eine Schichtdicke und/oder Schichtanzahl $N_{lay}$ und/oder eine aktive Fläche A des Kondensators anhand seiner mechanischen Abmessungen und seiner spannungsabhängigen Kapazität C(U) und der Permittivität $\varepsilon$ seines Dielektrikums bestimmt wird. Abhängig von diesen Parametern, insbesondere von der Schichtdicke und/oder Schichtanzahl $N_{lay}$ und/oder der aktiven Fläche A des Kondensators kann dann eine spannungsabhängige mechanische Verformung S(E) des Kondensators ermittelt werden. Die mechanische Verformung S(E) bei einem Kondensator, d.h. des Dielektrikums des Kondensators kann durch eine allgemeine piezoelektrische Gleichung bestimmt werden und liefert eine Volumenänderung und/oder Schichtdickenänderung des Kondensators. Die Volumenänderung und/oder Schichtdickenänderung ist dabei proportional zur dielektrischen Polarisation P(E).

Um die Genauigkeit zu erhöhen, kann vorgesehen sein, dass zur Bestimmung der Schichtanzahl $N_{lay}$ und/oder aktiven Fläche A des Kondensators wenigstens zwei, vorzugsweise drei oder vier, unterschiedliche Berechnungsmodelle, basierend auf verschiedenen angenommenen Randstärken, eines Gehäuses des Kondensators durchgeführt werden und anschließend eine Selektion erfolgt, indem die Kapazität jedes Berechnungsmodells ermittelt und mit einer tatsächlichen, vom Hersteller gegebene Kapazität, oder mit der maximal möglichen Kapazität verglichen und das Berechnungsmodell mit der kleinsten Abweichung ausgewählt wird. Die Selektion eines bestimmten Berechnungsmodells kann auch darauf beruhen, eine mögliche maximale Anzahl und/oder Größe der Kondensatorplatten mit einer berechneten Anzahl und/oder Größe der Kondensatorplatten zu vergleichen und das Berechnungsmodell mit der kleinsten Abweichung auszuwählen. Die maximale Anzahl und/oder Größe der Kondensatorplatten und die maximal mögliche Kapazität sind durch die Länge, Breite und Höhe des Kondensators begrenzt.

Das selektierte Berechnungsmodell kann anschließend als Berechnungsmodell für einen bestimmten Kondensatortyp zugrunde gelegt werden. Soll ein anderer Kondensatortyp analysiert werden, kann die Selektion eines Berechnungsmodells für diesen Kondensatortyp erneut durchgeführt werden. Auf diese Art und Weise kann beispielsweise die Bauform bzw. die Gehäusedicke eines Kondensatortyps berücksichtigt werden.

Es kann vorgesehen sein, dass die spannungsabhängige dielektrische Polarisation P(E) anhand der Formel

$$P(E) = a \ \tanh(b \ ( E - c )) \qquad (2)$$

ermittelt wird, wobei die mechanischen Verformung S(E) des Dielektrikums proportional zur Polarisation P(E) ist, wobei das elektrische Feld E durch die Spannung U und der Schichtdicke $d_{lay}$ des Kondensators definiert ist, und a, b und c kondensatorabhängige Faktoren und/oder eine Offsetspannung sind.

Vorzugsweise kann vorgesehen sein, dass die mechanische Verformung S(E) des Kondensators durch Aufaddierung der spannungsabhängigen mechanischen Verformung S(E) einer einzelnen Kondensatorschicht entsprechend der Gesamtzahl an Kondensatorschichten des Kondensators ermittelt wird.

Um die akustischen Störsignale einer Spule, insbesondere einer Spule mit einem Spulenkern, zu bestimmen, kann vorgesehen sein, dass zur Bestimmung der Magnetisierung M ein Sättigungsstrom $I_{sat}$ bestimmt wird. Dabei beschreibt der Sättigungsstrom $I_{sat}$ den Strom I, bei dem der Kern der Spule seine maximale Längenänderung erreicht hat. Der Kern weist dann seine Sättigungsmagnetisierung auf. Je nach Hersteller gibt der Sättigungsstrom $I_{sat}$ den Strom an, bei dem die Induktivität um 10-50% gegenüber der Nenninduktivität gefallen ist. Üblicherweise ist der Sättigungsstrom im Datenblatt angegeben. Alternativ kann der Sättigungsstrom auch über die Sättigungsflussdichte in bekannter Weise berechnet werden.

Vorzugsweise kann vorgesehen sein, dass die Magnetisierung M des Kerns anhand einer aus der Brillouin-Funktion resultierenden Sättigungs-Funktion oder einer Langevin-Funktion ermittelt wird.

Es kann zudem vorgesehen sein, dass die Magnetisierung M des Kerns unter Berücksichtigung des Sättigungsstroms des Kernmaterials anhand der Formel

$$M = \tanh (I(t) \ b \ /I_{sat} ) \qquad (3)$$

ermittelt wird, mit einem Sättigungsfaktor b. Der Sättigungsfaktor b kann entsprechend der Herstellerangaben oder der Herstellermessung angepasst werden und basiert darauf, bei welchem Induktivitätsabfall der Sättigungsstrom $I_{sat}$ angegeben wird.

Es kann vorgesehen sein, dass zur Bestimmung der mechanischen Verformung S(E) des Spulenkerns zumindest einer oder mehrere der folgenden Parameter bestimmt wird bzw. werden: die mechanischen Abmessungen der Spule und/oder des Spulenkerns, die Permittivität ($\mu$) des Spulenkerns und/oder eine materialabhängige Konstante des Spulenkerns (Magnetostriktions-Koeffizient). Die mechanische Verformung S(E) eines Spulenkerns wird durch die Magnetostriktion λ beschrieben und tritt durch ein sich wechselndes magnetisches Feld auf, welches durch die Spule im Spulenkern induziert wird.

Dabei beschreibt die Magnetostriktion λ eine Längenänderung des magnetischen Materials, welche durch die Magnetisierung verursacht wird und ist proportional zur Magnetisierung im Quadrat. Die mechanischen Abmessungen können die Länge $L_K$ des Spulenkerns oder die Wicklungszahl sein. Der Magnetostriktions-Koeffizient, oder auch Magnetostriktions-Konstante genannt, beschreibt eine relative Längenänderung des Körpers, normiert auf 1 Meter, parallel zum magnetischen Feld.

In einer einfach anzuwendenden Ausgestaltung kann vorgesehen sein, dass die Ermittlung der Klemmenspannung und/oder des Klemmenstromes eines Kondensators und/oder einer Spule rechnerisch anhand eines Rechnerprogramms zur Schaltungssimulation erfolgt, vorzugsweise indem das Schaltbild der Schaltung in das Rechnerprogramm eingegeben und ein Betrieb der Schaltung und/oder eine Spannungsanregung der Schaltung und/oder eine Stromanregung der Schaltung simuliert wird.

Bei der Klemmspannung handelt es sich um die elektrische Spannung U, die zwischen zwei Anschlüssen eines Kondensators und/oder einer Spule gemessen werden kann. Die Berechnung der Klemmenspannung kann z.B. mit den Rechnerprogrammen SPICE oder LTspice durchgeführt werden.

Es kann vorgesehen sein, dass als Spannungsanregung für die elektrische Schaltung eine virtuelle Spannungsquelle verwendet wird. Dabei hat es sich als vorteilhaft herausgestellt, dass die virtuelle Spannungsquelle vorzugsweise im hörbaren Frequenzbereich betrieben wird. Die untere Grenzfrequenz wird dabei lediglich durch die inverse Simulationszeit limitiert. Besonders bevorzugt sind Frequenz in einem Bereich zwischen 500 Hz und 20 MHz, insbesondere in einem Bereich zwischen 1 kHz und 10 MHz.

Es kann auch vorgesehen sein, dass als Stromanregung für die Schaltung eine virtuelle Stromquelle verwendet wird. Dabei hat es sich als vorteilhaft herausgestellt, dass die virtuelle Stromquelle vorzugsweise im hörbaren Frequenzbereich betrieben wird. Die untere Grenzfrequenz wird dabei lediglich durch die inverse Simulationszeit limitiert. Besonders bevorzugt sind Frequenz in einem Bereich zwischen 500 Hz und 20 MHz, insbesondere in einem Bereich zwischen 1 kHz und 10 MHz.

Vorteilhafterweise kann in einer Ausgestaltung vorgesehen sein, dass die Bestimmung einer periodischen, mechanischen Verformung S(E) des Dielektrikums und/oder des Spulenkerns anhand desselben Rechnerprogramms zur Schaltungssimulation erfolgt mit dem der Klemmenstromverlauf und/oder Klemmenspannungsverlauf bestimmt wird.

Beispielsweise kann vorgesehen sein, dass im Zuge der Analyse von unterschiedlich komplexen elektrischen Schaltungen mit einer unterschiedlich großen Anzahl an Kondensatoren und/oder Spulen mit dem Rechnerprogramm zur Schaltungssimulation, vorzugsweise mit einem handelsüblichen Rechnerprogramm wie SPICE oder LTspice, anhand eines zeitabhängigen Klemmenspannungsverlaufs und/oder eines zeitabhängigen Klemmenstromverlaufs eine mechanische Schwingung eines Kondensators und/oder einer Spule und/oder mehrerer Kondensatoren und/oder mehrerer Spulen berechnet wird. Um mehrere Betriebszustände zu analysieren kann beispielsweise vorgesehen sein, dass anhand mehrerer zeitabhängiger Klemmenspannungsverläufe und/oder Klemmenstromverläufe nacheinander mehrere mechanische Schwingungszustände eines Kondensators und/oder einer Spule und/oder mehrerer Kondensatoren und/oder mehrerer Spulen berechnet werden.

Die erfindungsgemäßen Verfahren können für eine Analyse unterschiedlichster Kondensatorentypen oder Spulentypen verwendet werden. Beispielsweise kann als Kondensator ein Wickelkondensator und/oder Metallfolienkondensator und/oder SMD-Kondensator und/oder Keramikkondensator verwendet werden. Alternativ oder ergänzend kann vorgesehen sein, dass als Spule eine Ringspule und/oder Drossel- und/oder SMD-Spule verwendet wird. Von Vorteil ist, dass das erfindungsgemäße Verfahren weitgehend unabhängig von der Baugröße der zu analysierenden Bauteile ist. Es kann bei sehr kleinen Bauteilen, also SMD-Kondensatoren und/oder SMD-Spulen angewendet werden. Auch bei relativ großen Bauteilen, beispielsweise bei Wickelkondensatoren für Hochspannung oder bei Trafospulen können sehr gute Resultate erzielt werden.

Um eine zeitsparende und effiziente Optimierung einer elektrischen Schaltung zu ermöglichen kann vorgesehen sein, dass mit dem Rechnerprogramm zur Schaltungssimulation nacheinander die periodische, mechanische Verformung eines oder mehrerer Kondensatoren und/oder einer oder mehrerer Spulen der Schaltung bestimmt werden und anschließend der Kondensator oder die Spule mit der größten, in Hörbereich liegenden periodischen, mechanischen Verformung selektiert wird. Somit kann dann gezielt der Kondensator oder die Spule mit dem größten akustischen Störsignal im Sinne einer Reduktion der akustischen Störsignale betrachtet werden.

Um eine schnelle und automatische Durchführung zu erzielen kann vorgesehen sein, dass für einen Kondensatortyp ein typspezifisches Berechnungsmodell auf Basis der Parameterschichtdicke und Schichtanzahl und aktiven Fläche des Kondensatortyps erstellt und dieses typspezifische Berechnungsmodell in das Rechnerprogramm zur Schaltungssimulation oder in eine Bauteilbibliothek des Rechnerprogramms zur Schaltungssimulation eingefügt wird. Anhand solcher fertigen Bauteilbibliotheken kann die Ermittlung akustischer Störsignale noch während der Entwicklungsphase einer elektrischen Schaltung sozusagen in einem Zuge mit der Simulation deren elektrischen Eigenschaften erfolgen.

Alternativ oder ergänzend kann entsprechend vorgesehen sein, dass für einen Spulentyp ein typspezifisches Berechnungsmodell auf Basis der Parameter Wicklungszahl, Länge und Breite oder Durchmesser der Spule und/oder des Spulenkerns, und Sättigungsmagnetisierung des Spulenkernmaterials erstellt wird und das typspezifische Berechnungsmodell in das Rechnerprogramm zur Schaltungssimulation oder in eine Bauteilbibliothek des Rechnerprogramms zur Schaltungssimulation eingefügt wird.

Um die tatsächlich abgestrahlten Störsignale zu ermitteln kann vorgesehen sein, dass nach der Bestimmung einer periodischen, mechanischen Schwingung eines Kondensators und/oder einer Spule und/oder mehrerer Kondensatoren und/oder mehrerer Spulen eine FEM-Analyse durchgeführt wird, um ein durch diese mechanische Schwingung oder Schwingungen auf einem Trägermaterial, vorzugsweise einer Leiterplatte oder PCB-Board, hervorgerufenes Körperschallsignal zu ermitteln.

FEM-Analyse ist eine numerische Lösungsmethode für Differentialgleichungen, bei der das Trägermaterial, z.B. eine Leiterplatte mit einer Schaltung in endlich viele Teilkörper einfacher Form in "finite Elemente" aufgeteilt wird und deren physikalisches Verhalten aufgrund ihrer einfachen Geometrie mit bekannten Ansatzfunktionen berechnet wird. Die Ansatzfunktionen enthalten Parameter, die eine physikalische Bedeutung besitzen, wie z. B. die Verschiebung eines bestimmten Punkts im Bauteil zu einem bestimmten Zeitpunkt.

Beispielsweise kann auch vorgesehen sein, dass eine FEM-Analyse durchgeführt wird, um den von dem Trägermaterial, vorzugsweise der Leiterplatte oder dem PCB-Board, abgestrahlten Luftschall zu ermitteln.

Um die ermittelten akustischen Störsignale besser zu beurteilen kann vorgesehen sein, dass eine Fourier-Transformation der periodischen, mechanischen Verformungen eines Kondensators und/oder einer Spule und/oder eines Körperschallsignals und/oder eines Luftschallsignals durchgeführt wird, um die im akustisch wirksamen Bereich liegenden Störfrequenzen zu ermitteln.

Insbesondere ist die Frequenz des akustischen Störsignals vorzugsweise unterschiedlich zu der Frequenz des elektrischen Signals an den Klemmen des Kondensators oder der Spule. Es hat sich gezeigt, dass sich die Frequenzen der akustischen Störsignale von den Frequenzen der als Klemmenspannung oder Klemmenstrom an den Kondensatoren oder Spulen anliegenden elektrischen Signale unterscheiden. Durch entsprechende mechanische Effekte oder Schwebungen können beispielsweise trotz relativ hochfrequenter elektrischer Signale, also Klemmenspannungsverläufen oder Klemmenstromverläufen deren Frequenz oberhalb des Hörbereichs liegt, akustisch wirksame Störfrequenzen innerhalb des Hörbereichs auftreten.

Die erfindungsgemäßen Verfahren können als Softwareprodukt hergestellt werden. Beispielsweise kann ein Programm vorgesehen sein, welches einen ablauffähigen Programmcode zur Durchführung eines erfindungsgemäßen Verfahrens umfasst.

Weiter kann ein Programmspeicherprodukt vorgesehen sein, welches ein ablauffähiges Programm zum Durchführen des erfindungsgemäßen Verfahrens enthält. Beispielsweise kann das ablauffähige Programm auf einem Datenträger wie einem USB-Stick, oder einer DVD gespeichert sein.

Weiter kann eine Rechnervorrichtung bzw. ein Computer vorgesehen sein, mit einem Mikroprozessor und einem nichtflüchtigen Speicher, wobei der nichtflüchtige Speicher einen ablauffähigen Programmcode eines Programms zur Durchführung des erfindungsgemäßen Verfahrens aufweist.

In den Figuren sind erläuternde Ausführungsbeispiele der Erfindung dargestellt und nachfolgend beschrieben. Dabei zeigen:

Fig. 1    allgemeiner Aufbau eines SMD-Vielschichtkondensators im Längsschnitt;

Fig. 2    schematische Darstellung der aktiven Fläche A im Kondensator der Fig. 1;

Fig. 3    Kapazitäts-Spannungs-Graph eines Kondensators;

Fig. 4a    akustische Störsignale berechnet nach dem erfindungsgemäßen Verfahren für eine Schaltung eines Kondensators auf einer Leiterplatte;

Fig. 4b    gemessene akustische Störsignale für eine Schaltung eines Kondensators auf einer Leiterplatte, wie in Fig. 4a;

Fig. 5    allgemeiner Aufbau einer Spule;

Fig. 6a    gemessene akustische Störsignale für eine Schaltung einer Spule auf einer Leiterplatte;

Fig. 6b    akustische Störsignale berechnet nach dem erfindungsgemäßen Verfahren für eine Schaltung einer Spule auf einer Leiterplatte;

Die erfindungsgemäßen Verfahren zur Ermittlung der Geräuschverteilung einer Schaltung durch rechnerbasierte Bestimmung akustischer Störsignale der elektrischen Schaltung werden durch die folgenden Ausführungsbeispiele näher erläutert:

**Beispiel Analyse eines Kondensators**

In einem ersten Ausführungsbeispiel des erfindungsgemäßen Verfahrens werden die akustischen Störsignale eines Murata 1206 2.2 μF Vielschicht-Kondensators auf einer Leiterplatte berechnet.

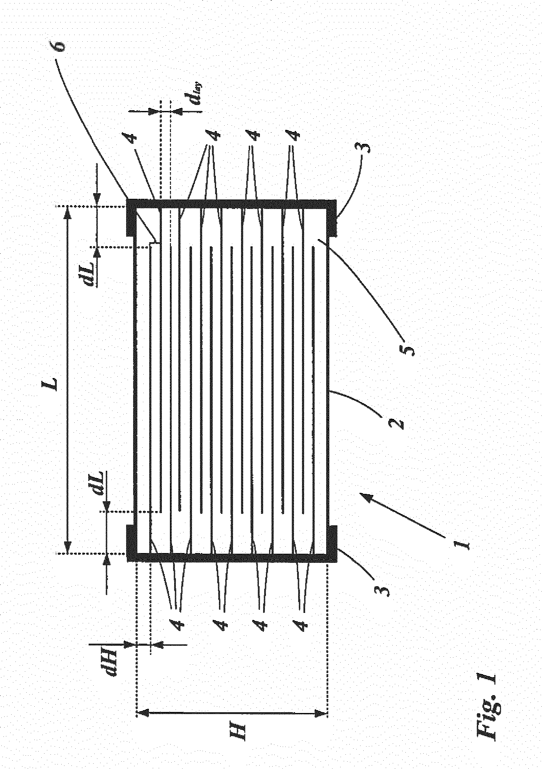

In Figur 1 ist der prinzipielle Aufbau eines solchen Vielschicht-Kondensators dargestellt, welcher im Folgenden als Kondensator 1 bezeichnet wird. Der Kondensator 1 besteht aus einem Gehäuse 2 mit Höhe H, Länge L, Breite B und metallischen Anschlussflächen 3 an den Seiten des Kondensators 1. Der Kondensator 1 ist mit seinen Anschlussflächen 3 an einer Leiterplatte (nicht in Figur 1 gezeigt) befestigt. Die Anschlussflächen 3 sind gegenpolig geladen und mit metallischen Elektroden 4 im Inneren des Kondensators 1 derart verbunden, dass abwechselnd gegenpolig geladene Elektroden 4 übereinander anordnen sind. Zwischen den einzelnen Elektroden 4 ist ein Dielektrikum 5 angeordnet. Dadurch tragen alle gegenpolig geladenen übereinanderliegenden Flächen der Elektroden 4 (Kondensatorplatten) zur Kapazität C des Kondensators 1 bei. Zwei sich gegenüberliegenden gegenpolig geladenen Elektroden 4 mit einem Dielektrikum 5 mit der Dicke $d_{lay}$ werden im Folgenden als Schicht 6 bezeichnet. Alle übereinander angeordneten Schichten 6 ergeben die Anzahl der Schichten $N_{lay}$ im Kondensator 1 die zur Kapazität C des Kondensators 1 beitragen.

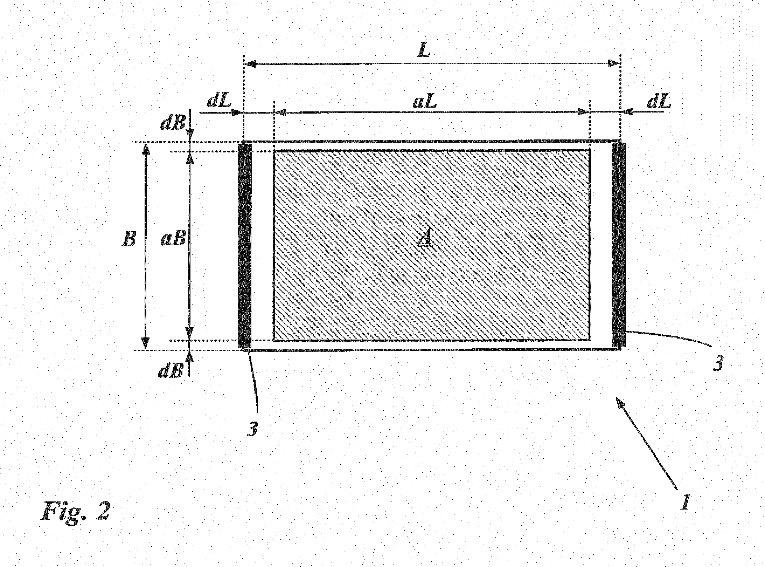

Die Kapazität C für den Kondensator 1 kann analog der Kapazität C eines Plattenkondensators berechnet werden, wobei nur die aktiven Flächen A aller Schichten 6 dazu beitragen, d.h. nur die übereinander angeordneten Flächen. In Figur 2 ist eine schematische Draufsicht des Kondensators 1 und der aktiven Fläche A einer Schicht 6 gezeigt. Die aktive Fläche A einer Schicht 6 ergibt sich aus der aktiven Länge aL und der aktiven Breite aB einer Schicht, d.h. die Länge L des Kondensators abzüglich der Längen-Randbereiche dL und der Breite B des Kondensators abzüglich der Breiten-Randbereiche dB, in denen keine gegenpolig geladenen Elektroden 4 angeordnet sind. Weiter sind die metallischen Elektroden 4 mit Abstand zur Gehäuseoberseite und Gehäuseunterseite angeordnet, wodurch sich auch Höhen-Randbereiche dH zwischen dem Gehäuse 2 und der obersten und untersten Elektrode 4 ausbilden (siehe Figur 1).

**Ermittlung der Parameter**

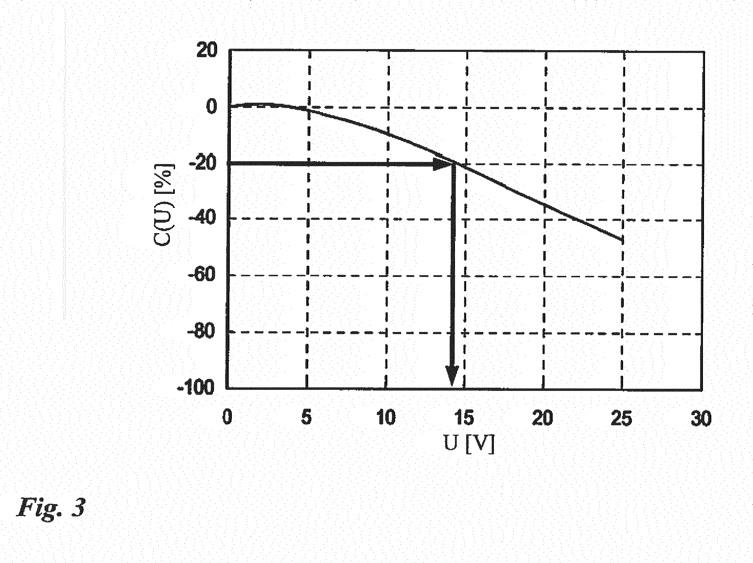

Für das erste Ausführungsbeispiel der ersten elektrischen Schaltung mit nur einem Kondensator 1 auf einer Leiterplatte, werden in dem erfindungsgemäßen Verfahren anhand von Herstellerangaben mehrere Parameter bestimmt, die zur Berechnung der akustischen Störsignale benötigt werden. Die Herstellerangaben sind in diesem ersten Ausführungsbeispiel die mechanischen Abmessungen des Kondensators und die spannungsabhängige Kapazität des Kondensators (siehe Figur 3). Die zu bestimmenden Parameter sind in diesem ersten Ausführungsbeispiel der Abstand $d_{lay}$ der Kondensatorplatten 4, die Anzahl $N_{lay}$ der Schichten 6 im Kondensator und die aktive Fläche A einer Schicht 6.

Zur Bestimmung des Abstands $d_{lay}$ der Kondensatorplatten 4, wird die Spannung $U_{C=-20\%}$ des Kondensators 1 ermittelt, bei der die Kapazität C des Kondensators um 20% der maximalen Kapazität C abgenommen hat. Dies kann erfindungsgemäß im Graphen (siehe Figur 3) der spannungsabhängigen Kapazität C des Herstellers abgelesen werden. In Figur 3 ist in X-Richtung die Spannung U angegeben und in Y-Richtung die Kapazitätsänderung in % wobei 0 die maximale Kapazität C des Kondensators 1 bedeutet. In dem Ausführungsbeispiel der Figur 3 ist die spannungsabhängige Kapazität C(U) eines Murata 1206 2.2 μF Kondensators dargestellt. Die Spannung $U_{C=-20\%}$ bei einem Kapazitätsabfall um 20% ist 14 V. Daraus wird erfindungsgemäß der Abstand $d_{lay}$ der Kondensatorplatten 4 mittels $d_{lay} = U_{C=-20\%} / 2$ [μm] bestimmt. Im Ausführungsbeispiel der Figur 3 ergibt sich dadurch ein Abstand $d_{lay}$ der Kondensatorplatten 4 von $d_{lay} = 7$ μm.

In einem nächsten Schritt werden verschiedene Berechnungsmodelle durchgeführt, welche sich durch die Größe der Randbereiche dB, dL und dH unterscheiden. D.h. die Modelle unterscheiden sich untereinander dadurch, wie hoch der prozentuelle Anteil der aktiven Flächen A im Bezug auf die Gesamtfläche $A_g$ der Länge L und Breite B des Kondensators 1 ist. Die verschiedenen Modelle werden in der Tabelle 1 mit kleiner Dichte, mittlerer Dichte und hoher Dichte bezeichnet. Dabei bedeutet kleine Dichte eine kleine aktive Fläche $A_k$, d.h. große Randbereiche (dB, dL) mit einer Größe von ca. 25-30% der Länge L und/oder Breite B des Kondensators 1. Eine mittlere Dichte bedeutet eine mittlere aktive Fläche $A_m$, d.h. mittlere Randbereiche (dB, dL) mit einer Größe von ca. 12-18%, vorzugsweise 15% der Länge L und/oder Breite B des Kondensators 1. Eine hohe Dichte bedeutet eine große aktive Fläche $A_h$, d.h. kleine Randbereiche (dB, dL) mit einer Größe von ca. 2 - 6%, vorzugsweise 4% der Länge L und/oder Breite B des Kondensators 1.

Tabelle 1

| Dichte | klein | mittel | hoch |
|---|---|---|---|
| Ax | 2,72E-06 | 3,75E-06 | 4,78E-06 |
| dlay+dE | 8,00E-06 | 7,75E-06 | 7,50E-06 |
| C(E)x | 1,20E-08 | 1,66E-08 | 2,11E-08 |
| Nlayx | 183 | 133 | 104 |
| Nmaxx | 129 | 134 | 147 |

Anhand der aktiven Fläche $A_x$ der verschiedenen Modelle x, d.h. klein x = k, mittel x = m, hoch x = h und dem Abstand $d_{lay}$ der Kondensatorplatten 4 einer Schicht 6, kann die Kapazität C einer Schicht 6 des Kondensators 1 für die verschiedenen Modelle x mit

$$C(E)_x = \varepsilon_r \varepsilon_0\, A_x\, /\, d_{lay} \qquad\qquad (4)$$

berechnet werden. Dabei ist $\varepsilon_0$ die dielektrische Konstante im Vakuum, $\varepsilon_r$ die materialabhängige dielektrische Konstante des Dielektrikums 5 und x das Modell. Das tiefgestellte x bedeutet, dass der Wert eine modellabhängige Größe besitzt. Die Permittivität $\varepsilon$ wird durch $\varepsilon = \varepsilon_r \varepsilon_0$ beschrieben. Aus dem Vergleich der berechneten Kapazität $C_x$ einer dichteabhängigen Schicht 6 mit der Kapazität C der Herstellerangabe kann ermittelt werden wie viele Schichten $N_{layx}$ der Kondensator 1 in jedem Modell aufweisen muss, um die Kapazität der Herstellerangabe aufzuweisen. Im ersten Ausführungsbeispiel des Murata 1206 Kondensators ist die Kapazität C des Kondensators durch die Herstellerangabe mit C = 2.2 $\mu$F gegeben. $N_{layx}$ beschreibt die Anzahl der Schichten 6 in Anhängigkeit des Modells x mit $N_{layx} = C / C_x$. Dies bedeutet, dass die Anzahl $N_{lay}$ der Schichten 6 mit steigender Dichte der Modelle abnimmt (siehe Tabelle 1) um die Kapazität C der Herstellerangabe zu erreichen.

Als nächster Schritt wird ermittelt, welches Modell x den Kondensator 1 am besten beschreibt. Dafür wird die dichteabhängige Höhe $H_x$ durch den Abstand der Kondensatorplatten $d_{lay}$ und der Dicke dE der Elektroden 4 geteilt, woraus eine modellabhängige maximale Anzahl $N_{maxx}$ der Schichten 6 folgt. Unter der dichteabhängigen Höhe $H_x$ wird, wie auch unter der dichteabhängigen Länge $L_x$, die Höhe H des Kondensators 1 des Kondensators abzüglich der Randbereiche (dH) verstanden. Die Randbereiche (dH) können modellabhängig eine Größe von ca. 12-2% der gesamten Höhe des Kondensatorgehäuses aufweisen.

Um zu bestimmen welches Modell x den Kondensator 1 am besten beschreibt, wird die Anzahl $N_{layx}$ der Schichten 6 mit der maximale Anzahl $N_{maxx}$ der Schichten 6 eines Modells miteinander verglichen. Die für die weitere Berechnung benötigte Anzahl $N_{lay}$ der Schichten 6 wird durch die modellabhängige Anzahl $N_{layx}$ mit der kleinsten Abweichung unterhalb ihrer modellabhängigen maximalen Anzahl $N_{maxx}$ bestimmt. Eine Abweichung von der modellabhängigen Anzahl $N_{layx}$ über der modellabhängigen maximalen Anzahl $N_{maxx}$ ist mechanisch nicht möglich, da die maximal in einen Kondensator angeordneten Schichten 6 durch die dichteabhängige Höhe dH begrenzt werden. Im ersten Ausführungsbeispiel beschreibt das Model mit der mittleren Dichte in Tabelle 1 den Kondensator 1 am besten. Daraus folgt die Anzahl $N_{lay}$ = 133 der Schichten 6 im Kondensator, mit einer aktiven Fläche A = 3,75E-06m$^2$ und mit dem Abstand $d_{lay}$ = 7 $\mu$m der Kondensatorplatten 4.

Anhand eines zweiten Kondensators 1 wurde der wie oben beschrieben erfindungsgemäß ermittelte Abstand der Kondensatorplatten $d_{lay}$ und die anhand der aktiven Fläche A erfindungsgemäß ermittelte Anzahl $N_{lay}$ der Schichten 6 im Kondensator 1 mit einer Messung des Kondensators 1 verglichen. Dazu wurden anhand des oben beschriebenen Verfahrens die Parameter bestimmt und derselbe Kondensator 1 unter einem Mikroskop vermessen. Für diesen Kondensator 1 wurde anhand der spannungsabhängigen Kapazität ein Abstand $d_{lay}$ der Kondensatorplatten mit 11 $\mu$m aus seinen Spannungs-Kapazitäts-Graphen ermittelt. Aus den weiteren Herstellerangaben wurden für diesen Kondensator die Anzahl der Schichten $N_{lay}$ = 184 nach dem oben beschriebenen Ausführungsbeispiel ermittelt. Die zum Vergleich unter dem Mikroskop gemessenen Werte für diesen Kondensator 1 liegen bei $d_{lay}$ = 11-12 $\mu$m und $N_{lay}$ = 186.

**Berechnung der akustischen Störsignale**

Die nachfolgenden Berechnungen des ersten Ausführungsbeispiels können z.B. mit der Software SPICE oder LTspice durchgeführt werden, um rechnerisch die akustischen Störsignale einer elektrischen Schaltung zu bestimmen.

Zur Berechnung der akustischen Störsignale wird anhand eines Schaltbilds der Schaltung der Klemmspannungsverlauf U(t) am Kondensator 1 rechnerisch bestimmt. Dazu wird auf Basis des Schaltbilds ein Betrieb der Schaltung simuliert. Durch den Klemmspannungsverlauf U(t) und dem zuvor ermittelten Abstand $d_{lay}$ der Kondensatorplatten kann mit der Formel $E_{diff} = U(t) / d_{lay}$ das elektrische Feld $E_{diff}$ im Kondensator 1 berechnet werden.

In einem nächsten Schritt wird die dielektrische Polarisation P(E) des dielektrischen Materials des Kondensators 1 anhand der Formel

$$P(E) = a \tanh( b ( E_{diff} )) \qquad (5)$$

berechnet, basierend auf $E_{diff}$ und den kondensatorabhängigen Faktoren a und b, welche unter anderem die dielektrische Konstante im Vakuum $\varepsilon_0$, die materialabhängige dielektrische Konstante des Dielektrikums $\varepsilon_r$ und weitere materialabhängige Konstanten enthalten.

Mit der berechneten Polarisation P(E) kann die mechanische Verformung S(E) des dielektrischen Materials mit einer allgemeinen piezoelektrischen Gleichung berechnet werden, wobei für die mechanische Verformung S(E)

$$S(E) = E_{diff} \, d_{lay} \, N_{lay} \, d_{33} \, P(E)^{norm} \qquad (6)$$

gilt, mit $P(E)^{norm}$ einer auf die Sättigung normalisierte Polarisation und einer piezoelektrischen materialabhängigen Konstante $d_{33}$, welche mit der Herstellerangabe des Materials aus der Literatur bestimmt werden kann.

Nachdem man die mechanische Verformung S(E) des Kondensators 1 bestimmt hat, kann mittels einer FEM-Analyse (Finite-Element-Methode) in bekannter Weise das hervorgerufene Körperschallsignal bestimmt werden, welches in dem ersten Ausführungsbeispiel durch den Kondensator 1, der auf einen Trägermaterial befestigt ist, verursacht wird. FEM-Analyse ist eine numerische Lösungsmethode für Differentialgleichungen, bei der das Trägermaterial, z.B. eine Leiterplatte mit einer Schaltung in endlich viele Teilkörper einfacher Form in "finite Elemente" aufgeteilt wird und deren physikalisches Verhalten aufgrund ihrer einfachen Geometrie mit bekannten Ansatzfunktionen berechnet wird. Die Ansatzfunktionen enthalten Parameter, die eine physikalische Bedeutung besitzen, wie z. B. die Verschiebung eines bestimmten Punkts im Bauteil zu einem bestimmten Zeitpunkt, z.B. die mechanische Verformung S(E) des Kondensators 1 im ersten Ausführungsbeispiel, die Position der Kondensators 1 auf der Leiterplatte, die Maße der Leiterplatte und die Befestigung des Gehäuses 2 des Kondensators 1.

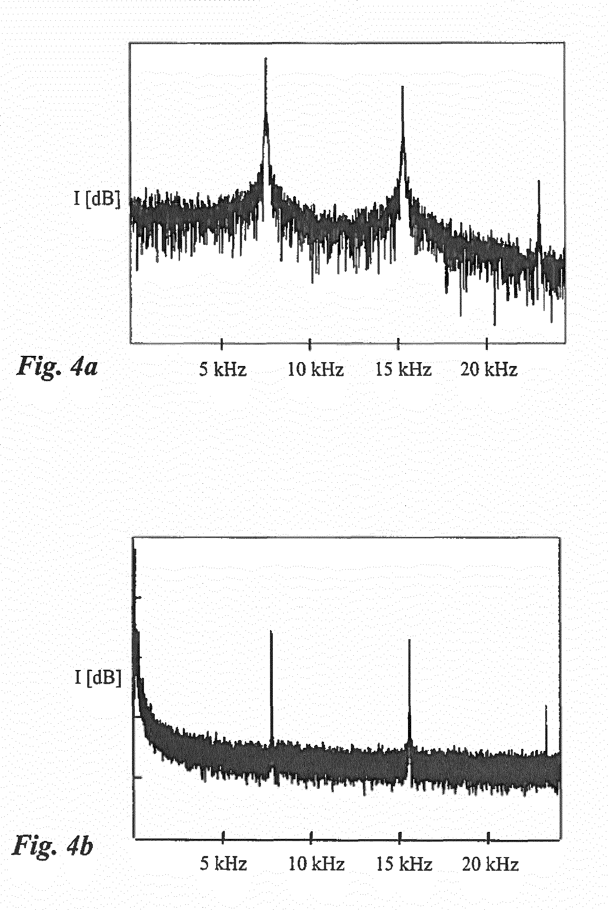

In den Figuren 4a und 4b wird zum Vergleich das Ergebnis des oben beschriebenen Verfahrens zur rechnerischen Bestimmung der akustischen Störsignale der elektrischen Schaltung aus dem ersten Ausführungsbeispiel (Figur 4a) und eine Audiomessung (Figur 4b) derselben elektrischen Schaltung dargestellt, welche eine gute Übereinstimmung der berechneten und der gemessenen Frequenzen zeigen. Dazu wurde das Verfahren wie oben beschrieben durchgeführt, indem zuerst notwendige Parameter aus den Herstellerangaben ermittelt wurden, anschließend die mechanische Verformung S(E) berechnet wurde und dann durch eine Finite-Element-Analyse (FEM) die akustischen Störsignale der elektrischen Schaltung bestimmt wurden. Die Audiomessung in Figur 4a wurde mit dem oben beschriebenen Kondensator 1 auf einer Leiterplatte, welche für die Finite-Element-Analyse benutzt wurde, mittels eines Mikrofons durchgeführt.

Die Bestimmung der akustischen Störsignale im ersten Ausführungsbeispiel des oben beschriebenen Verfahrens kann analog für einen Wickelkondensator, Metallfolienkondensator oder SMD-Kondensator durchgeführt werden, wobei dann die Ermittlung der Parameter an die jeweilige Form des Kondensators angepasst werden muss.

**Beispiel Analyse einer Spule**

In einem weiteren Ausführungsbeispiel des erfindungsgemäßen Verfahrens zur Ermittlung der Geräuschverteilung einer Schaltung werden die akustischen Störsignale einer L-6RCC 30μH Spule auf einer Leiterplatte berechnet.

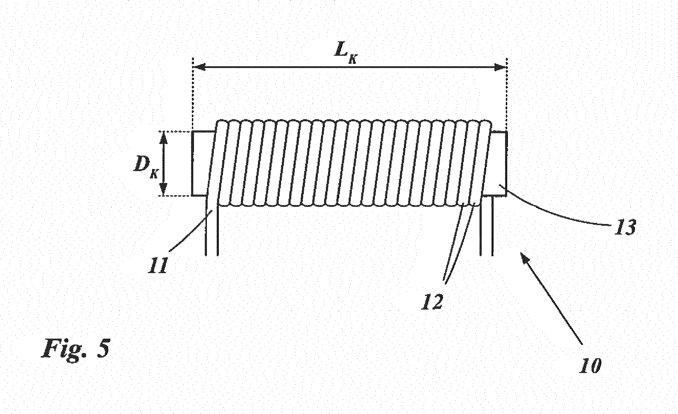

In Figur 5 wird der prinzipielle Aufbau einer solchen Spule 10 dargestellt. Die Spule besteht aus einem Draht 11 mit mehreren Wicklungen 12. Die Wicklungen 12 sind um einen Kern 13 angeordnet, der eine Länge $L_K$ und einen Durchmesser $D_K$ aufweist.

Die nachfolgenden Berechnungsschritte des Ausführungsbeispiels können mit der Software SPICE oder LTspice durchgeführt werden, um rechnerisch die akustischen Störsignale einer elektrischen Schaltung zu bestimmen.

Zur Berechnung der akustischen Störsignale wird anhand eines Schaltbilds der Schaltung mit der Spule 11 ein Klemmstromverlauf I(t) rechnerisch bestimmt. Im diesen Ausführungsbeispiel wird ein Klemmstromverlauf I(t) mit $I(t) = I_0 \sin(2\,\pi\,f\,t)$ angenommen, mit der Frequenz f und der Zeit t. Dazu wird auf Basis des Schaltbilds ein Betrieb der Schaltung simuliert.

Die Magnetostriktion $\lambda$ des Kerns 13 beschreibt die mechanische Verformung S(E), d.h. eine Längenänderung $d\lambda$ des Kerns 13 infolge eines angelegten magnetischen Feldes. Die Längenänderung $d\lambda$ tritt durch einen Stromfluss durch die Wicklungen 12 und dadurch einer Ausrichtung der magnetischen Domänen im Kern 13 auf. Aus dem oben beschriebenen Klemmstromverlauf I(t) folgt, dass bei angelegtem Strom I(t) der Kern 13 mit der doppelten Frequenz oszilliert. Die Längenänderung dλ des magnetischen Kerns 13 kann bis zu einer Sättigung erfolgen, d.h. einer maximale Längenänderung dλ$_{max}$ des Kerns 13, d.h. dass die magnetischen Domänen im Kern 13 dann vollständig parallel zum Feld ausgerichtet sind.

Die Magnetostriktion λ des Kerns 13 ist in erster Näherung proportional zur Magnetisierung M, welche sich in einfacher Weise durch eine aus der Brillouin-Funktion resultierenden Sättigungs-Funktion beschreiben lässt mit

$$M = \tanh (I(t)\, a) \qquad\qquad (7)$$

wobei a ein Sättigungsparameter darstellt. Es ist auch möglich die Magnetisierung M mit einer Langevin-Funktion mit M = c coth(I(t) d) zu beschreiben, mit materialabhängigen Parametern c und d. Der Sättigungsparameter a setzt sich zusammen aus einem Sättigungsfaktor b und einem Sättigungsstrom I$_{sat}$, bei dem die Sättigung erreicht ist, d.h. ab welchem Strom I(t)= I$_{sat}$ der Kern 13 seine maximale Längenänderung dλ$_{max}$ erreicht hat. Der Sättigungsstrom I$_{sat}$ kann aus den Herstellerangaben entnommen werden und hängt unter anderem von der Wicklungszahl 12 ab und von der Art der Herstellermessung, d.h. die Annahme bei wie viel Prozent der vollständigen Sättigung (komplette Längenausdehnung) der Sättigungsstrom I$_{sat}$ angegeben wird. Der Sättigungsfaktor b muss entsprechend der Herstellermessung in der Formel (4) angepasst werden.

Die Magnetostriktion λ ist abhängig von der Magnetisierung im Quadrat und beschreibt daher die zweimalige Ausdehnung des Kerns bei der oben angenommenen Schwingungsform des Stroms I(t). Anhand der Magnetisierung M wird die Magnetostriktion λ mit

$$\lambda = M^2\, \lambda_S\, L \qquad\qquad (8)$$

berechnet, mit der Länge L des Kerns 13 und einem Magnetostriktions-Koeffizienten λ$_S$. Der Magnetostriktions-Koeffizienten λ$_S$ ist vom Material des Kerns 12 abhängig und kann durch die Herstellerangabe des Materials aus allgemein zugängiger Literatur entnommen werden.

Mit der mechanischen Verformung S(E), d.h. die Längenänderung durch die Magnetostriktion λ des Kerns 13 der Spule 10 durch die Magnetisierung M kann analog zum oben beschriebenen ersten Ausführungsbeispiel mittels einer FEM (Finite-Element-Methode) das hervorgerufene Körperschallsignal bestimmt werden, welches in dem Ausführungsbeispiel durch die Spule 1 auf einer Leiterplatte verursacht wird.

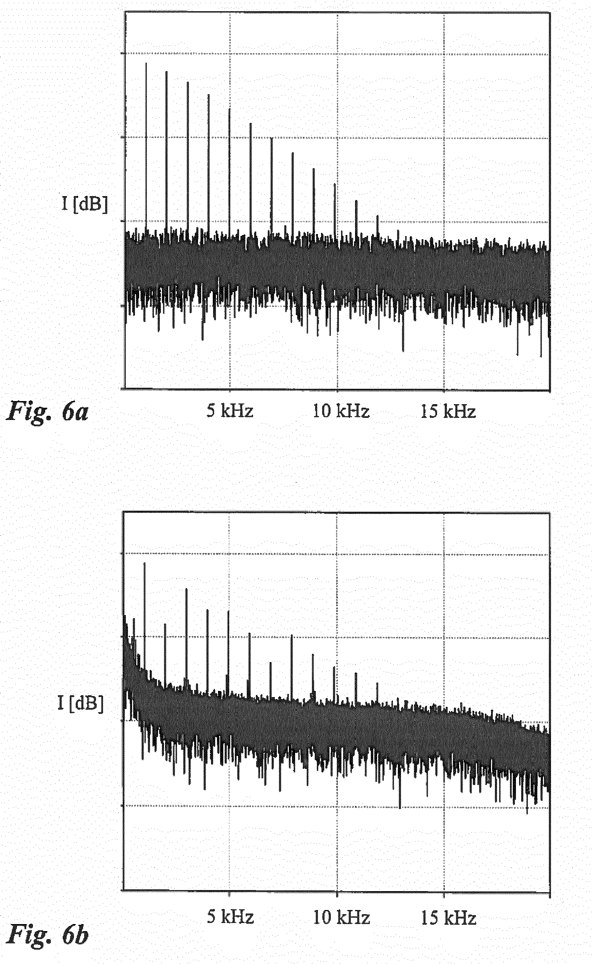

In den Figuren 6a und 6b wird das oben beschriebene Verfahren für das Ausführungsbeispiel zur rechnerischen Bestimmung der akustischen Störsignale einer elektrischen Schaltung (Figur 6a) und eine Audiomessung (Figur 6b) derselben elektrischen Schaltung dargestellt, wobei eine gute Übereinstimmung der Frequenzen zu erkennen ist. Dazu wurde das Verfahren wie oben im Ausführungsbeispiel beschrieben durchgeführt, die Volumenänderung durch die Magnetisierung M mit Parametern aus den Herstellerangaben berechnet und dann durch eine Finite-Element-Analyse (FEM) die akustischen Störsignale der elektrischen Schaltung bestimmt.

Bezugszeichenliste

1    Kondensator
2    Gehäuse
3    Anschlussflächen
4    Elektrode
5    Dielektrikum
6    Schicht

10    Spule
11    Draht
12    Wicklung
13    Kern

L$_K$    Länge des Kerns 13

A    aktive Fläche
A$_x$    modellabhängige aktive Fläche

$A_k$     kleine aktive Fläche
$A_m$     mittlere aktive Fläche
$A_h$     große aktive Fläche

x     Modell

L     Länge
aL     aktive Länge
dL     Längen-Randbereich
B     Breite
aB     aktive Breite
dB     Breiten-Randbereich
H     Höhe
dH     Höhen-Randbereich

$d_{lay}$     Abstand der Elektroden 4
$N_{lay}$     Anzahl der Schichten 6

**Patentansprüche**

1.  Verfahren zur Ermittlung der Geräuschverteilung einer Schaltung zur Optimierung des Layouts der Schaltung, durch rechnerische Bestimmung, d.h. durch computerbasierte Berechnung oder computerbasierte Simulation akustischer Störsignale der elektrischen Schaltung, wobei die elektrische Schaltung wenigstens einen Kondensator mit einem Dielektrikum aufweist,

    wobei zunächst anhand eines Schaltbilds der Schaltung ein an dem Kondensator anliegender Klemmenspannungsverlauf rechnerisch ermittelt wird, indem auf Basis des Schaltbilds ein Betrieb der Schaltung simuliert wird, und wobei anschließend anhand des Klemmenspannungsverlaufs ein auf das Dielektrikum wirkendes elektrisches Feld bestimmt, wobei zur Bestimmung des elektrischen Feldes zunächst eine Schichtdicke des Kondensators anhand seiner spannungsabhängigen Kapazität bestimmt wird, und daraus eine auf dem elektrischen Feld basierende periodische, mechanische Verformung des Dielektrikums berechnet wird,
    wobei zur Optimierung des Layouts der Schaltung Komponenten mit hoher Geräuschverteilung ersetzt, befestigt oder anders positioniert werden.

2.  Verfahren nach Anspruch 1,
    **dadurch gekennzeichnet,**
    **dass** zur Bestimmung der mechanischen Verformung des Dielektrikums zunächst die Schichtdicke und/oder eine Schichtanzahl und/oder eine aktive Fläche des Kondensators anhand seiner mechanischen Abmessungen und seiner Kapazität (C) und der Permittivität (ε) seines Dielektrikums (5) bestimmt wird.

3.  Verfahren nach Anspruch 2,
    **dadurch gekennzeichnet,**
    **dass** zur Bestimmung der Schichtdicke und/oder Schichtanzahl und/oder aktiven Fläche des Kondensators wenigstens zwei unterschiedliche Berechnungsmodelle, basierend auf verschiedenen angenommenen Randstärken, eines Gehäuses des Kondensators durchgeführt werden und anschließend eine Selektion erfolgt, indem die Kapazität jedes Berechnungsmodells ermittelt und mit einer tatsächlichen oder mit der maximal möglichen Kapazität des Kondensators verglichen und das Berechnungsmodell mit der kleinsten Abweichung ausgewählt wird.

4.  Verfahren nach einem der vorhergehenden Ansprüche,
    **dadurch gekennzeichnet,**

    **dass** die spannungsabhängige Polarisation anhand der Formel

    $$P(E) = a \tanh(b\,(\,E - c\,))$$

    ermittelt wird, wobei die mechanische Verformung des Dielektrikums proportional zur Polarisation (P(E)) ist und das elektrische Feld E durch die Spannung U und die Schichtdicke d des Kondensators definiert ist, und a, b und c kondensatorabhängige Faktoren und/oder eine Offsetspannung darstellen.

5. Verfahren nach Anspruch 4,
   **dadurch gekennzeichnet,**
   **dass** die mechanische Verformung des Kondensators durch Aufaddierung der spannungsabhängigen mechanischen Verformung einer einzelnen Kondensatorschicht entsprechend der Gesamtzahl an Kondensatorschichten des Kondensators ermittelt wird.

6. Verfahren nach einem der vorhergehenden Ansprüche,
   **dadurch gekennzeichnet,**

   **dass** die elektrische Schaltung wenigstens eine Spule mit einem Spulenkern aufweist,
   wobei zunächst anhand eines Schaltbilds der Schaltung ein durch die Spule fließender Klemmenstromverlauf rechnerisch ermittelt wird, indem auf Basis des Schaltbilds ein Betrieb der Schaltung simuliert wird, und wobei anschließend anhand des Klemmenstromverlaufs eine auf den Spulenkern wirkende Magnetisierung bestimmt und daraus eine auf der Magnetisierung basierende periodische, mechanische Verformung des Spulenkerns berechnet wird.

7. Verfahren nach einem der vorhergehenden Ansprüche,
   **dadurch gekennzeichnet,**
   **dass** die Ermittlung der Klemmenspannung und/oder des Klemmenstromes rechnerisch anhand eines Rechnerprogramms zur Schaltungssimulation erfolgt.

8. Verfahren nach Anspruch 7,
   **dadurch gekennzeichnet,**
   **dass** das Schaltbild der Schaltung in das Rechnerprogramm eingegeben und ein Betrieb der Schaltung und/oder eine Spannungsanregung der Schaltung und/oder eine Stromanregung der Schaltung simuliert wird.

9. Verfahren nach Anspruch 8,
   **dadurch gekennzeichnet,**

   **dass** als Spannungsanregung für die Schaltung eine virtuelle Spannungsquelle verwendet wird, vorzugsweise dass die virtuelle Spannungsquelle im hörbaren Frequenzbereich betrieben wird, besonders bevorzugt in einem Frequenzbereich zwischen 500 Hz und 20 MHz, und/oder
   **dass** als Stromanregung für die Schaltung eine virtuelle Stromquelle verwendet wird.

10. Verfahren nach Anspruch 9,
    **dadurch gekennzeichnet,**
    **dass** die virtuelle Stromquelle im hörbaren Frequenzbereich betrieben wird, besonders bevorzugt in einem Frequenzbereich zwischen 500 Hz und 20 MHz.

11. Verfahren nach einem der Ansprüche 7 bis 10,
    **dadurch gekennzeichnet,**
    **dass** die Bestimmung einer periodischen, mechanischen Verformung des Dielektrikums und/oder des Spulenkerns anhand desselben Rechnerprogramms zur Schaltungssimulation erfolgt, mit dem der Klemmenstromverlauf und/oder Klemmenspannungsverlauf bestimmt wird.

12. Verfahren nach einem der Ansprüche 7 bis 11,
    **dadurch gekennzeichnet,**
    **dass** mit dem Rechnerprogramm zur Schaltungssimulation anhand eines zeitabhängigen Klemmenspannungsverlaufs und/oder eines zeitabhängigen Klemmenstromverlaufs eine mechanische Schwingung eines Kondensator und/oder einer Spule und/oder mehrerer Kondensatoren und/oder mehrerer Spulen berechnet wird, oder dass anhand mehrerer zeitabhängiger Klemmenspannungsverläufe und/oder Klemmenstromverläufe mehrerer mechanischer Schwingungszustände eines Kondensators und/oder einer Spule und/oder mehrerer Kondensatoren und/oder mehrerer Spulen berechnet werden.

13. Verfahren nach einem der Ansprüche 7 bis 12,

**dadurch gekennzeichnet,**

**dass** mit dem Rechnerprogramm zur Schaltungssimulation nacheinander die periodische, mechanische Verformung mehrerer Kondensatoren und/oder mehrerer Spulen der Schaltung bestimmt werden und der Kondensator oder die Spule mit der größten, in Hörbereich liegenden periodischen, mechanischen Verformung selektiert wird.

14. Verfahren nach einem der Ansprüche 7 bis 13,
**dadurch gekennzeichnet,**

**dass** für einen Kondensatortyp ein typspezifisches Berechnungsmodell auf Basis der Parameterschichtdicke und Schichtanzahl und aktiven Fläche des Kondensatortyps erstellt und dieses typspezifische Berechnungsmodell in das Rechnerprogramm zur Schaltungssimulation oder in eine Bauteilbibliothek des Rechnerprogramms zur Schaltungssimulation eingefügt wird, und/oder dass für einen Spulentyp ein typspezifisches Berechnungsmodell auf Basis der Parameter Wicklungszahl, Länge und Breite oder Durchmesser der Spule und/oder des Spulenkerns, und Sättigungsmagnetisierung des Spulenkernmaterials erstellt wird und das typspezifische Berechnungsmodell in das Rechnerprogramm zur Schaltungssimulation oder in eine Bauteilbibliothek des Rechnerprogramms zur Schaltungssimulation eingefügt wird.

15. Verfahren nach einem der vorhergehenden Ansprüche,
**dadurch gekennzeichnet,**

**dass** nach der Bestimmung einer periodischen, mechanischen Schwingung eines Kondensators und/oder einer Spule und/oder mehrerer Kondensatoren und/oder mehrerer Spulen eine FEM-Analyse durchgeführt wird, um ein durch diese mechanische Schwingung oder Schwingungen auf einem Trägermaterial, vorzugsweise einer Leiterplatte oder PCB-Board, hervorgerufenes Körperschallsignal zu ermitteln.

**Claims**

1. Method for ascertaining the noise distribution of a circuit, for optimising the layout of the circuit, by computational determination, i.e. by computer-based calculation or computer-based simulation of acoustic interference signals of the electrical circuit, the electrical circuit having at least one capacitor with a dielectric,

   wherein a terminal voltage characteristic applied to the capacitor is first ascertained by calculation using a circuit diagram of the circuit by simulating an operation of the circuit on the basis of the circuit diagram, and wherein an electric field acting on the dielectric is subsequently determined using the terminal voltage characteristic, wherein to determine the electric field, a layer thickness of the capacitor is first determined using the voltage-dependent capacitance thereof, and a periodic, mechanical deformation of the dielectric based on the electric field is calculated therefrom,
   wherein to optimise the layout of the circuit, components with high noise distribution are replaced, attached or positioned differently.

2. Method according to claim 1,
**characterised in that**
to determine the mechanical deformation of the dielectric, the layer thickness and/or number of layers and/or an active area of the capacitor is first determined on the basis of its mechanical dimensions and its capacitance (C) and the permittivity ($\varepsilon$) of its dielectric (5).

3. Method according to claim 2,
**characterised in that**
to determine the layer thickness and/or number of layers and/or active area of the capacitor, at least two different calculation models, based on various assumed edge thicknesses, of a housing of the capacitor are performed, and a selection is subsequently made by ascertaining the capacitance of each calculation model and comparing it with an actual capacitance or with the maximum possible capacitance of the capacitor and selecting the calculation model with the smallest deviation.

4. Method according to one of the preceding claims
**characterised in that**

   the voltage-dependent polarisation is ascertained using the formula

$$P(E) = a \tanh(b\,(\,E - c\,)),$$

wherein the mechanical deformation of the dielectric is proportional to the polarisation (P(E)), and the electric field E is defined by the voltage U and the layer thickness d of the capacitor, and a, b and c represent capacitor-dependent factors and/or an offset voltage.

5. Method according to claim 4,
**characterised in that**
the mechanical deformation of the capacitor is ascertained by adding up the voltage-dependent mechanical deformation of an individual capacitor layer corresponding to the total number of capacitor layers of the capacitor.

6. Method according to one of the preceding claims,
**characterised in that**
the electrical circuit has at least one coil with a coil core,
wherein a terminal current characteristic flowing through the coil is first ascertained by calculation using a circuit diagram of the circuit by simulating operation of the circuit on the basis of the circuit diagram, and wherein a magnetisation acting on the coil core is subsequently determined using the terminal current characteristic and a periodic, mechanical deformation of the coil core based on the magnetisation is calculated therefrom.

7. Method according to one of the preceding claims,
**characterised in that**
the terminal voltage and/or the terminal current is ascertained by calculation using a computer program for circuit simulation.

8. Method according to claim 7,
**characterised in that**
the circuit diagram of the circuit is input into the computer program and an operation of the circuit and/or a voltage excitation of the circuit and/or a current excitation of the circuit is simulated.

9. Method according to claim 8,
**characterised**

**in that** a virtual voltage source is used as voltage excitation for the circuit, preferably in that the virtual voltage source is operated in the audible frequency range, particularly preferably in a frequency range between 500 Hz and 20 MHz, and/or
**in that** a virtual current source is used as current excitation for the circuit.

10. Method according to claim 9,
**characterised in that**
the virtual current source is operated in the audible frequency range, particularly preferably in a frequency range between 500 Hz and 20 MHz

11. Method according to one of claims 7 to 10,
**characterised in that**
a periodic, mechanical deformation of the dielectric and/or of the coil core is determined using the same computer program for circuit simulation with which the terminal current characteristic and/or the terminal voltage characteristic is determined.

12. Method according to one of claims 7 to 11,
**characterised in that**
a mechanical oscillation of a capacitor and/or of a coil and/or of a plurality of capacitors and/or a plurality of coils is calculated with the computer program for circuit simulation on the basis of a time-dependent terminal voltage characteristic and/or a time-dependent terminal current characteristic, or **in that** a plurality of mechanical oscillation states of a capacitor and/or of a coil and/or of a plurality of capacitors and/or a plurality of coils are calculated on the basis of a plurality of time-dependent terminal voltage characteristics and/or terminal current characteristics.

13. Method according to one of claims 7 to 12,

**characterised in that**
the periodic, mechanical deformation of a plurality of capacitors and/or of a plurality of coils of the circuit are successively determined with the computer program for circuit simulation and the capacitor or the coil with the greatest periodic, mechanical deformation lying within the audible range is selected.

14. Method according to one of claims 7 to 13,
**characterised**

> **in that** a type-specific calculation model is created for a capacitor type on the basis of the parameters layer thickness and number of layers and active area of the capacitor type, and this type-specific calculation model is inserted into the computer program for circuit simulation or into a component library of the computer program for circuit simulation, and/or
> **in that** a type-specific calculation model is created for a coil type on the basis of the parameters number of turns, length and width or diameter of the coil and/or coil core, and saturation magnetisation of the coil core material, and the type-specific calculation model is inserted into the computer program for circuit simulation or into a component library of the computer program for circuit simulation.

15. Method according to one of the preceding claims,
**characterised in that**
following the determination of a periodic, mechanical oscillation of a capacitor and/or of a coil and/or of a plurality of capacitors and/or of a plurality of coils, FEM analysis is carried out in order to ascertain a structure-borne sound signal caused by this mechanical oscillation or oscillations on a carrier material, preferably a circuit board or PCB.

**Revendications**

1. Procédé pour la détermination de la répartition du bruit d'un circuit pour l'optimisation de la disposition du circuit, par calcul, c'est-à-dire par calcul informatique ou simulation informatique de signaux parasites acoustiques du circuit électrique, dans lequel le circuit électrique comprend au moins un condensateur avec un diélectrique,

> dans lequel un tracé de la tension aux bornes, appliquée au condensateur, est d'abord déterminé par calcul à l'aide d'un schéma de branchement du circuit, en simulant, sur la base du schéma de branchement, un fonctionnement du circuit et dans lequel un champ électrique agissant sur le diélectrique est ensuite déterminé à l'aide du tracé de la tension aux bornes, dans lequel, pour la détermination du champ électrique, une épaisseur de couche du condensateur est d'abord déterminée à l'aide de sa capacité en fonction de la tension et une déformation mécanique périodique du diélectrique, basée sur le champ électrique est calculée à partir de celle-ci, dans lequel, pour l'optimisation de la disposition du circuit, les composants avec une répartition élevée du bruit sont remplacés, fixés ou positionnés autrement.

2. Procédé selon la revendication 1,
**caractérisé en ce que**
pour la détermination de la déformation mécanique du diélectrique, l'épaisseur de couche et/ou un nombre de couches et/ou une surface active du condensateur est déterminée à l'aide de ses dimensions mécaniques et de sa capacité (C) et de la permittivité ($\varepsilon$) de son diélectrique (5).

3. Procédé selon la revendication 2,
**caractérisé en ce que**
pour la détermination de l'épaisseur de couche et/ou du nombre de couches et/ou de la surface active du condensateur, au moins deux modèles de calcul différents, basés sur différentes épaisseurs de bord supposées, d'un boîtier du condensateur, sont réalisés puis une sélection a lieu en déterminant la capacité de chaque modèle de calcul et comparés avec une capacité effective ou avec la capacité maximale possible du condensateur et le modèle de calcul avec l'écart le plus faible est sélectionné.

4. Procédé selon l'une des revendications précédentes,
**caractérisé en ce que**

> la polarisation en fonction de la tension est déterminée à l'aide de la formule

$$p(E) = a \tanh(b(E-c))$$

dans laquelle la déformation mécanique du diélectrique est proportionnelle à la polarisation (P(E)) et le champ électrique E est défini par la tension U et l'épaisseur de couche d du condensateur,
et a, b et c représentent des facteurs spécifiques au condensateur et/ou une tension d'offset.

**5.** Procédé selon la revendication 4,
**caractérisé en ce que**
la déformation mécanique du condensateur est déterminée en additionnant la déformation mécanique en fonction de la tension d'une couche de condensateur individuelle en fonction du nombre total de couches du condensateur.

**6.** Procédé selon l'une des revendications précédentes,
**caractérisé en ce que**

le circuit électrique comprend au moins une bobine avec un noyau de bobine,
dans lequel un tracé du courant aux bornes traversant la bobine est d'abord déterminé à l'aide d'un schéma de branchement du circuit, en simulant, sur la base du schéma de branchement, un fonctionnement du circuit et dans lequel une magnétisation agissant sur le noyau de bobine est ensuite déterminée à l'aide du tracé du courant aux bornes et une déformation mécanique périodique du noyau de bobine, basée sur la magnétisation, est calculée à partir de celle-ci.

**7.** Procédé selon l'une des revendications précédentes,
**caractérisé en ce que**
la détermination de la tension aux bornes et/ou du courant aux bornes est effectuée par calcul à l'aide d'un programme informatique pour la simulation du circuit.

**8.** Procédé selon la revendication 7,
**caractérisé en ce que**
le schéma de branchement du circuit est entré dans le programme informatique et un fonctionnement du circuit et/ou une excitation de tension du circuit et/ou une excitation de courant du circuit est simulée.

**9.** Procédé selon la revendication 8,
**caractérisé en ce que**

en tant qu'excitation de tension pour le circuit, on utilise une source de tension virtuelle, de préférence **en ce que** la source de tension virtuelle est utilisée dans le domaine des fréquences audibles,
plus particulièrement de préférence dans un domaine de fréquences entre 500 Hz et 20 MHz et/ou
**en ce que**, en tant qu'excitation de courant pour le circuit, on utilise une source de courant virtuelle.

**10.** Procédé selon la revendication 9,
**caractérisé en ce que**
la source de courant virtuelle est utilisée dans le domaine des fréquences audibles, plus particulièrement de préférence dans un domaine de fréquences entre 500 Hz et 20 MHz.

**11.** Procédé selon l'une des revendications 7 à 10,
**caractérisé en ce que**
la détermination d'une déformation mécanique périodique du diélectrique et/ou du noyau de bobine est effectuée à l'aide du même programme informatique pour la simulation du circuit que celui avec lequel le tracé de courant aux bornes et/ou le tracé de tension aux bornes est déterminé.

**12.** Procédé selon l'une des revendications 7 à 11,
**caractérisé en ce que**
avec le programme informatique pour la simulation du circuit, à l'aide d'un tracé de tension aux bornes en fonction du temps et/ou d'un tracé de courant aux bornes en fonction du temps, une oscillation mécanique d'un condensateur et/ou d'une bobine et/ou de plusieurs condensateurs et/ou de plusieurs bobines est calculée ou **en ce que**, à l'aide de plusieurs tracés de tension aux bornes en fonction du temps et/ou de plusieurs tracés de courant aux bornes en fonction du temps, plusieurs états d'oscillation mécanique d'un condensateur et/ou d'une bobine et/ou de plusieurs condensateurs et/ou de plusieurs bobines sont calculés.

13. Procédé selon l'une des revendications 7 à 12,
**caractérisé en ce que**
avec le programme informatique pour la simulation du circuit, les déformations mécaniques périodiques de plusieurs condensateurs et/ou de plusieurs bobines du circuit sont déterminées successivement et le condensateur ou la bobine avec la déformation mécanique périodique la plus grande dans le domaine audible est sélectionné.

14. Procédé selon l'une des revendications 7 à 13,
**caractérisé en ce que**

pour un type de condensateur, un modèle de calcul spécifique au type est établi sur la base des paramètres : épaisseur de couche et nombre de couches et de la surface active du type de condensateur et ce modèle de calcul spécifique au type est intégré dans le programme informatique pour la simulation du circuit ou dans une bibliothèque de composants du programme informatique pour la simulation du circuit et/ou
**en ce que**, pour un type de bobine, un modèle de calcul spécifique au type est établi sur la base des paramètres : nombres de spires, longueur et largeur ou diamètre de la bobine et/ou du noyau de bobine et magnétisation de saturation du matériau du noyau de bobine et le modèle de calcul spécifique au type est intégré dans le programme informatique pour la simulation du circuit ou dans une bibliothèque de composants du programme informatique pour la simulation du circuit.

15. Procédé selon l'une des revendications précédentes,
**caractérisé en ce que**
après la détermination d'une oscillation mécanique périodique d'un condensateur et/ou d'une bobine et/ou de plusieurs condensateurs et/ou de plusieurs bobines, une analyse FEM est effectuée, afin de déterminer un signal de bruit structurel provoqué par cette oscillation ou ces oscillations mécaniques sur un matériau de support, de préférence une carte de circuit imprimé ou une carte PCB.

**Fig. 1**

EP 3 407 032 B1

*Fig. 2*

*Fig. 3*

*Fig. 4a*

*Fig. 4b*

Fig. 5

*Fig. 6a*

*Fig. 6b*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 104330647 A
- WO 2014157495 A